(19) Europäisches Patentamt / European Patent Office / Office européen des brevets

(11) **EP 1 965 156 B1**

(12) **FASCICULE DE BREVET EUROPEEN**

(45) Date de publication et mention de la délivrance du brevet:
**08.04.2020 Bulletin 2020/15**

(51) Int Cl.:
***F25B 41/06*** *(2006.01)*    *F25B 49/02* *(2006.01)*

(21) Numéro de dépôt: **08100554.8**

(22) Date de dépôt: **16.01.2008**

(54) **Installation de climatisation équipée d'une vanne de détente électrique**

Klimaanlage mit elektrischem Entspannungsventil

Air conditioning device equipped with an electric expansion valve

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **28.02.2007 FR 0701445**

(43) Date de publication de la demande:
**03.09.2008 Bulletin 2008/36**

(73) Titulaire: **Valeo Systèmes Thermiques**
**78321 Le Mesnil Saint Denis Cedex (FR)**

(72) Inventeur: **LIU, Jing Ming**
**78700 Conflans Ste Honorine (FR)**

(74) Mandataire: **Metz, Gaëlle et al**
**Valeo Systèmes Thermiques**
**8, rue Louis Lormand**
**CS 80517 La Verrière**
**78322 Le Mesnil Saint Denis Cedex (FR)**

(56) Documents cités:
EP-A- 0 837 291    EP-A- 1 493 979
EP-A- 1 703 229    WO-A-2006/073814
DE-A1- 2 451 361    FR-A- 2 539 855
FR-A1- 2 815 397    JP-A- 2002 081 766
JP-A- 2004 061 061    US-A1- 2004 144 106
US-A1- 2007 000 262

- HEYL P: "DER EFFEKTIVE EINSATZ DES INNEREN WAERMEUEBERTRAGERS IN TRANSKRITISCHEN CO2-PROZESSEN THE EFFECTIVE USING OF THE INTERNAL HEAT EXCHANGER IN TRANSCRITICAL CO2-PROZESSES" KI. LUFT- UND KAELTETECHNIK, HEIDELBERG, DE, vol. 39, août 2003 (2003-08), pages 344-348, XP008028728 ISSN: 0945-0459

## Description

L'invention concerne les installations de climatisation, notamment pour véhicules automobiles.

Une installation de climatisation de ce type est équipée d'un circuit de climatisation comprenant principalement un compresseur, un condenseur ou un refroidisseur de gaz, un dispositif de détente et un évaporateur parcourus, dans cet ordre, par un fluide réfrigérant.

Le compresseur comprime le fluide réfrigérant pour l'amener à une pression élevée puis le transmet au condenseur, où il est refroidi. Dans le dispositif de détente, le fluide réfrigérant est détendu de manière à abaisser sa pression. Le fluide à basse pression passe ensuite à travers l'évaporateur pour y être vaporisé avant de retourner dans le compresseur. Un flux d'air traversant l'évaporateur est refroidi ou climatisé et est envoyé vers l'habitacle d'un véhicule automobile.

De plus, les installations de climatisation peuvent également comporter un échangeur interne permettant un échange de chaleur entre le fluide réfrigérant en deux points distincts du circuit de climatisation. De telles installations sont notamment connues des documents EP-A-0 837 291, EP-A-1 703 229, JP 2002 081766 A ou US 2007/000262 A. La demande de brevet FR 2815 397 divulgue une installation de climatisation comportant un échangeur interne dont l'efficacité est évaluée au moyen de capteurs de température, ainsi qu'au moyen d'un capteur de débit de fluide réfrigérant.

Il est connu d'utiliser en particulier une vanne de détente électrique comme dispositif de détente, pour contrôler le débit de fluide détendu.

Dans une telle vanne de détente, le degré d'ouverture est régulé par un signal de commande adapté en fonction de certains paramètres de fonctionnement

Par exemple, il est connu de réguler la section de passage de la vanne de détente électrique en fonction d'une mesure de la pression et de la température fournie par un capteur placé à la sortie de l'évaporateur. Cependant, les capteurs à basse pression du type utilisés en sortie de l'évaporateur sont onéreux.

Plus généralement, les installations connues ne permettent pas d'optimiser le degré d'ouverture de la vanne de détente électrique en fonction des conditions de fonctionnement de la climatisation et utilisent un nombre de capteurs important, augmentant ainsi considérablement le coût global de l'installation. De plus, de telles installations nécessitent l'implantation des capteurs en différents points, ce qui a pour conséquence de rendre ces installations plus complexes et encombrantes.

L'invention vise à améliorer la situation en proposant une installation de climatisation, notamment pour véhicule à moteur, équipée d'un circuit climatisation suivant la revendication 1. Suivant cette revendication, l'installation de climatisation est équipée d'un circuit climatisation comprenant un compresseur, un condenseur, une vanne de détente électrique dont le degré d'ouverture varie en fonction d'un signal de commande, un évaporateur, parcourus dans cet ordre par un fluide réfrigérant, et un échangeur interne permettant au fluide circulant du condenseur vers le dispositif de détente de céder de la chaleur au fluide circulant de l'évaporateur vers le compresseur, l'installation comportant en outre une unité de contrôle apte à contrôler le signal de commande de la vanne de détente à partir de mesures de température et de pression effectuées par un capteur de pression et de température du fluide réfrigérant disposé à la sortie du condenseur et/ ou à l'entrée de la vanne de détente de manière à réguler une grandeur de commande relative au sous refroidissement du condenseur selon une loi de régulation choisie, l'installation étant caractérisée en que l'unité de contrôle régule l'efficacité de l'échangeur interne de façon à garantir une protection contre une température de refoulement du compresseur trop élevée et de limiter la pression d'aspiration du compresseur, l'unité de contrôle étant apte à comparer l'efficacité de l'échangeur interne à un seuil prédéfini pour réguler l'efficacité de l'échangeur interne, l'unité de contrôle étant apte à déterminer la valeur de l'efficacité de l'échangeur interne à partir du débit massique du fluide réfrigérant estimé en fonction de mesures de la haute pression et de la température de sous refroidissement du fluide réfrigérant.

Le signal de commande de la vanne du compresseur permet:

- d'obtenir une architecture électrique optimale tout en ayant un minimum de capteurs,
- d'avoir un coefficient optimal de performance (COP) maximal, et
- de protéger l'installation pour limiter la température de refoulement et/ou d'aspiration du compresseur

L'invention permet ainsi d'optimiser le coefficient de performance (COP) de la climatisation tout en utilisant un nombre minimal de capteurs, et donc de réduire le coût de l'installation.

Des caractéristiques optionnelles de l'installation de climatisation de l'invention, complémentaires ou de substitution, sont énoncées ci-après:

- L'unité de contrôle est apte à effectuer la régulation de la grandeur de commande en comparant la grandeur de commande à une valeur de consigne de la grandeur de commande.

- La grandeur relative à la surchauffe correspond à la différence entre deux mesures de températures prises au niveau de l'évaporateur.

- Les deux mesures de température correspondent respectivement à la température du fluide en entrée et en sortie de l'évaporateur.

- Elle comporte deux sondes de température placées au contact du fluide en entrée et en sortie de l'évaporateur propres à fournir les deux mesures de température.

- Les deux mesures de température correspondent respectivement à la température maximale et à la température minimale du flux d'air qui balaie l'évaporateur.

- Elle comporte deux sondes de température, placées dans les ailettes de l'évaporateur et/ou derrière l'évaporateur, propres à fournir respectivement une mesure de la température maximale et de la température minimale.

- Le compresseur est un compresseur à contrôle externe muni d'une vanne de contrôle dont la section de passage varie en fonction d'un signal de commande, tandis que l'unité de contrôle est apte à contrôler le signal de commande du compresseur de manière à réguler la température d'évaporation de l'évaporateur calculée en fonction des mesures de température.

- La grandeur relative au sous refroidissement correspond à la température de sous refroidissement du fluide réfrigérant.

- Elle comporte une sonde de température placée au contact du fluide en sortie du condenseur propre à fournir une mesure de la température de sous refroidissement.

- Elle comporte une sonde de température placée au contact du fluide en entrée de la vanne de détente propre à fournir une mesure de la température de sous refroidissement.

- Le compresseur est à contrôle externe tandis que l'unité de contrôle est en outre apte à contrôler la vanne de détente et le compresseur de manière à maintenir la température et la pression de refoulement en sortie du compresseur en dessous de seuils respectifs prédéterminés.

- La grandeur relative au sous refroidissement correspond à la différence entre la température de saturation du fluide réfrigérant et la température de sous refroidissement du fluide réfrigérant.

- Elle comporte un capteur de température placé au contact du fluide en entrée de la vanne de détente propre à fournir une mesure de la température de sous refroidissement.

- Elle comporte un capteur de pression placé au contact du fluide en entrée de la vanne de détente propre à fournir une mesure de la pression en entrée de la vanne de détente tandis que l'unité de contrôle est apte à estimer la température de saturation du fluide à partir de la mesure de pression.

- La grandeur relative au sous refroidissement correspond à la pression et à la température en sortie du condenseur.

- Elle comporte un capteur de pression en sortie du condenseur pour mesurer la pression du fluide en sortie du condenseur.

- Elle comporte un capteur de température apte à fournir une mesure de la température du fluide en sortie du condenseur, tandis que l'unité de contrôle est apte à estimer la consigne de la pression en sortie du condenseur à partir de la mesure de température fournie par le capteur.

- Le capteur de température est placé au contact du fluide en sortie du condenseur.

- Le circuit de climatisation comprend en outre un échangeur interne tandis que l'unité de contrôle est en outre apte à contrôler la vanne de détente de manière à réguler en outre l'efficacité de l'échangeur interne.

- L'unité de contrôle est apte à comparer l'efficacité de l'échangeur interne à un seuil prédéfini pour réguler l'efficacité de l'échangeur interne.

- L'unité de contrôle est apte à déterminer la valeur de l'efficacité de l'échangeur interne à partir du débit massique du fluide dans le condenseur estimé en fonction de mesures de la haute pression et de la température de sous refroidissement du fluide réfrigérant.

- Elle comprend un capteur de température et de pression placé en sortie du condenseur pour mesurer la haute pression et la température de sous refroidissement du fluide réfrigérant.

- La régulation de la grandeur de commande est une régulation en boucle fermée.

- Les mesures de température et de pression sont effectuées par un capteur de pression et de température disposé à la sortie du compresseur et/ou à l'entrée et/ou sortie du condenseur et/ou en entrée de la vanne de détente.

- L'unité de contrôle gère le signal de commande de la vanne de détente et/ou du compresseur pour limiter la température de décharge et/ou d'aspiration du compresseur.

L'invention propose en outre un procédé de régulation d'un circuit de climatisation tel que défini en revendication 22.

D'autres caractéristiques et avantages de l'invention apparaîtront à l'examen de la description détaillée ci-après, et des dessins annexés sur lesquels :

- la figure 1 est un schéma d'un circuit de climatisation utilisé dans l'installation de l'invention;

- la figure 2 est un schéma d'une installation de climatisation qui n'est pas conforme à l'invention ;

- la figure 3 est un schéma représentant une variante de l'installation de la figure 2, laquelle n'est pas non plus selon l'invention;

- la figure 4 est un schéma fonctionnel de l'installation illustrée sur la figure 2;

- la figure 5 est un schéma d'une autre installation de climatisation qui n'est pas conforme à l'invention ;

- les figures 6 à 9 sont des schémas représentant des variantes de réalisation de l'installation de la figure 5, parmi lesquelles les variantes des figures 7 et 8 sont conformes à l'invention;

- la figure 10 est un schéma fonctionnel de la variante de réalisation de l'invention illustrée sur la figure 7;

- la figure 11 est un diagramme représentant l'évolution de l'efficacité $E_{IHX}$ en fonction du débit massique Mc de fluide dans le condenseur; et

- la figure 12 est un schéma fonctionnel de la variante de réalisation de l'invention illustrée sur la figure 8.

Les dessins contiennent, pour l'essentiel, des éléments de caractère certain. Ils pourront donc non seulement servir à mieux faire comprendre la description, mais aussi contribuer à la définition de l'invention, le cas échéant.

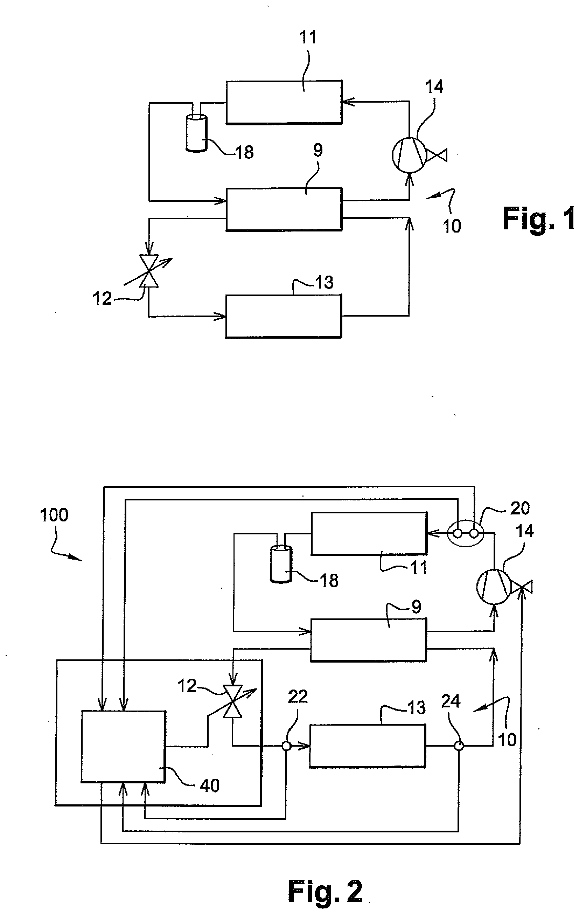

On se réfère tout d'abord à la figure 1 qui représente un schéma d'un circuit de climatisation 10, destiné notamment à être intégré dans un véhicule automobile.

Le circuit de climatisation est parcouru par un fluide réfrigérant, en particulier un fluide fluoro-chloré fonctionnant selon un cycle sous critique, comme par exemple le fluide R-134a. Toutefois, la présente invention couvre par ailleurs les circuits de climatisation parcourus par tous fluides alternatifs employés dans les boucles thermodynamiques pour de telles installations et fonctionnant selon un cycle super critique.

Le circuit de climatisation 10 comporte principalement un compresseur 14, un condenseur 11, un dispositif de détente 12, et un évaporateur 13, parcourus dans cet ordre par le fluide réfrigérant.

Le compresseur 14 reçoit le fluide à l'état gazeux et le comprime. Le fluide réfrigérant à haute pression passe ensuite dans le condenseur 11, où il est refroidi. Le dispositif de détente 12 abaisse ensuite la pression du fluide, avant de passer dans l'évaporateur 13. Dans l'évaporateur 13, le fluide est amené à l'état gazeux de manière à refroidir ou à climatiser un flux d'air traversant l'évaporateur qui peut être envoyé dans l'habitacle du véhicule.

Plus précisément, le condenseur 11 est traversé un flux d'air permettant d'évacuer la chaleur prélevée au fluide réfrigérant. Le flux d'air traversant le condenseur est, dans certaines conditions de fonctionnement, mis en mouvement par un groupe moto ventilateur. Dans le condenseur 11, le fluide réfrigérant subit d'abord une désurchauffe à pression constante pour abaisser la température du fluide, puis une condensation à pression constante. Le fluide est ensuite sous refroidi pour pouvoir alimenter le détendeur en liquide.

Dans une première partie de l'évaporateur 13, le fluide à l'état de mélange liquide/vapeur absorbe de la chaleur jusqu'à ce que tout le liquide se vaporise. Dans une deuxième partie de l'évaporateur appelée "zone de surchauffe", le fluide entièrement vaporisé est surchauffé.

Le circuit comporte en outre un échangeur thermique interne 9, permettant au fluide circulant du condenseur 11 de gaz vers le dispositif de détente 12 de céder de la chaleur au fluide circulant de l'évaporateur 13 vers le compresseur 14.

Une bouteille 18 peut également être prévue en sortie du condenseur 11 pour stocker l'excédent de liquide qui en sort. Selon une alternative de réalisation, la bouteille 18 peut être installée en entrée du dispositif de détente 12. Le compresseur 14 est en particulier un compresseur à contrôle externe et à cylindrée variable. Bien que l'invention puisse s'appliquer à d'autres types de compresseurs, par exemple les compresseurs à contrôle interne à embrayage, l'invention est particulièrement avantageuse pour les compresseurs à contrôle externe et à cylindrée variable. La suite de la description sera donc faite en référence à un compresseur 14 à contrôle externe et à cylindrée variable, à titre d'exemple non limitatif.

Selon la présente invention, le dispositif de détente 12 est une vanne de détente électrique. Les vannes de détente électriques présentent une section de passage dont le degré d'ouverture varie en fonction d'un signal de commande.

La figure 2 est un schéma représentant une première variante de réalisation d'une installation de climatisation 100 destinée à équiper un véhicule automobile. L'installation est munie du circuit de climatisation 10 décrit en référence à la figure 1.

De manière classique, l'installation comprend un dispositif de commande de climatisation, non représenté, pour réguler les paramètres de fonctionnement de la climatisation. Ces paramètres sont notamment fonction des conditions de confort requises par l'utilisateur et définies par les indications portées par le tableau de commande disposé dans l'habitacle du véhicule. De même, ces paramètres sont dépendants des conditions extérieures et des grandeurs mesurées sur le circuit de climatisation.

Le dispositif de commande de climatisation comporte un calculateur de climatisation pour calculer certains des paramètres de fonctionnement, une unité de régulation du confort de l'habitable de la climatisation, et un tableau de commande d'habitacle dont le rôle est en particulier de fixer la consigne de la température d'évaporation $T_{evapocons}$. Selon l'invention, l'installation comprend une unité de contrôle 40 adaptée pour contrôler le signal de commande de la vanne de détente 12 de manière à réguler une grandeur de commande relative à la surchauffe de l'évaporateur ou au sous refroidissement du condenseur 11, selon une loi de régulation choisie.

L'unité de contrôle 40 proposée par l'invention permet ainsi de contrôler la vanne de détente 12 de manière à optimiser la surchauffe à la sortie de l'évaporateur ou le sous refroidissement à l'entrée de la vanne de détente 12. L'invention permet non seulement d'optimiser la surchauffe à la sortie de l'évaporateur et le sous refroidissement à l'entrée de la vanne de détente 12, mais aussi de limiter la température du fluide à l'entrée ou à la sortie du compresseur. L'invention permet ainsi de limiter la consigne de la surchauffe et/ou du sous refroidissement en prenant en compte le déséquilibre maximum entre les températures de l'évaporateur. Ce déséquilibre est en effet connu pour avoir une grande influence sur le confort de l'utilisateur. En contrôlant indirectement ce déséquilibre, l'invention améliore par conséquent le confort dans l'habitacle tout en optimisant le coefficient de performance (COP) du circuit de climatisation.

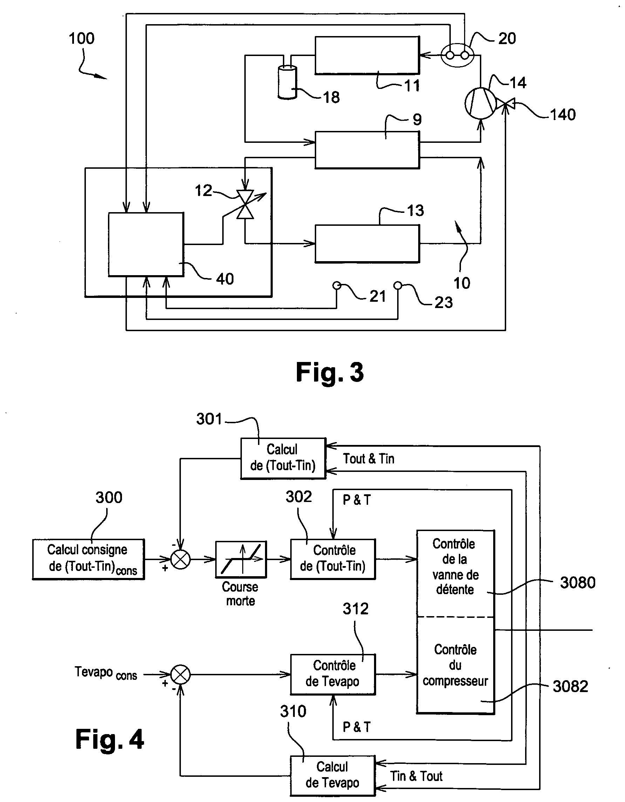

Les figures 2 et 3 correspondent à une première forme de réalisation dans laquelle le fonctionnement de la vanne de détente 12 est contrôlé par l'unité de contrôle 40 de manière à réguler une grandeur relative à la surchauffe de l'évaporateur, selon une loi de régulation choisie.

Dans cette première forme de réalisation de l'invention, la grandeur relative à la surchauffe de l'évaporateur correspond en particulier à la différence entre deux mesures de températures mesurées représentatives de la surchauffe de l'évaporateur 13.

Plus précisément, sur la figure 2, la grandeur relative à la surchauffe correspond à la différence ($T_{out}$ - $T_{in}$) entre la température $T_{out}$ du fluide réfrigérant en sortie de l'évaporateur et la température $T_{in}$ du fluide réfrigérant à l'entrée de l'évaporateur. Les températures $T_{out}$ et $T_{in}$ sont, selon l'exemple de réalisation de la figure 2, mesurées en utilisant des sondes de températures 24 et 22 placées respectivement à la sortie de l'évaporateur et à l'entrée de l'évaporateur, au contact du fluide réfrigérant.

Dans la variante de la figure 3, la grandeur relative à la surchauffe de l'évaporateur correspond à la différence ($T_{max}$ -$T_{min}$) entre la température maximale $T_{max}$ de l'évaporateur 13 et la température minimale $T_{min}$ de l'évaporateur 13 de l'air qui traverse l'évaporateur 13, au niveau de la zone de surchauffe.

Les températures $T_{max}$ et $T_{min}$ sont, selon l'exemple de réalisation de la figure 3, être mesurées en utilisant des sondes à thermistance de structure classique 23 et 21 placées dans les ailettes de l'évaporateur 13 ou derrière l'évaporateur 13 respectivement dans la zone la plus 'chaude' et la zone la plus 'froide' de l'évaporateur 13, dans sa zone de surchauffe. L'emplacement des sondes de températures est déterminé par la cartographie de l'évaporateur 13, c'est-à-dire la répartition en température de l'évaporateur 13.

Par zone la plus 'chaude', on entend la région de l'évaporateur 13 ayant la température la plus élevée et par zone la plus 'froide', on entend la région de l'évaporateur 13 ayant la température la plus faible.

La variante de la figure 3 permet de mesurer le déséquilibre de la température du flux d'air traversant l'évaporateur, sans avoir à insérer deux capteurs de température dans les conduits du circuit de climatisation, et permet donc de limiter les fuites de fluide.

Dans la première forme de réalisation, qui n'est pas conforme à l'invention, l'unité de contrôle 40 régule le fonctionnement de la vanne de détente 12 en contrôlant la grandeur relative à la surchauffe, c'est-à-dire ($T_{out}$-$T_{in}$) dans le cas de la figure 2 ou ($T_{max}$ - $T_{min}$) dans le cas de la figure 3, selon une loi de régulation adaptée.

En particulier, la loi de régulation peut être une régulation en boucle fermée, par exemple de type PID (Proportionnelle Intégrale Dérivée). Dans ce cas, l'unité de contrôle détermine la consigne de la grandeur relative à la surchauffe, à savoir ($T_{out}$ - $T_{in}$)$_{cons}$ ou ($T_{max}$ - $T_{min}$)$_{cons}$ selon le cas, puis compare la grandeur relative à la surchauffe, telle que déterminée à partir des mesures fournies par les capteurs 24 et 22, ou 23 et 21, selon le cas, à la consigne de cette grandeur. Le signal de commande de la vanne de détente 12 est ensuite ajusté tant que la grandeur relative à la surchauffe n'a pas atteint sa consigne.

En complément, l'invention propose de réguler le compresseur 14, lorsque celui-ci est un compresseur à contrôle externe. Un compresseur à contrôle externe est muni d'une vanne de contrôle qui ajuste la cylindrée du compresseur en fonction d'un signal de commande.

Les compresseurs à contrôle externe sont classiquement contrôlés en utilisant une loi de régulation en boucle fermée, par exemple une régulation de type PID, qui repose sur la minimisation de l'écart entre la mesure de la température d'évaporation $T_{evapo}$ du compresseur et la consigne $T_{evapocons}$ de la température d'évaporation du compresseur ($T_{evapo}$ - $T_{evapocons}$). La consigne de la température d'évaporation représente la température cible demandée dans l'habitacle par un passager du véhicule.

L'invention prévoit de mettre en oeuvre une telle loi de régulation du compresseur à contrôle externe 14 en utilisant les mesures de température que fait intervenir la grandeur de commande relative à la surchauffe, c'est-à-dire $T_{in}$ et $T_{out}$ dans le cas de la figure 2 ou $T_{min}$ et $T_{max}$ dans le cas de la figure 3, pour calculer la valeur de la température d'évaporation, à réguler selon la loi de régulation du compresseur choisie.

Ainsi, dans la variante illustrée sur la figure 2, la valeur de la température d'évaporation $T_{evapo}$ est calculée en fonction de la température du fluide réfrigérant en sortie de l'évaporateur $T_{out}$ et de la température du fluide réfrigérant à l'entrée de l'évaporateur $T_{in}$ selon la loi :

$$T_{evapo} = x.T_{in} + (1-x).T_{out}.$$

où x est un coefficient obtenu expérimentalement ou calculé pour estimer la température de l'air traversant l'évaporateur.

Dans la variante représentée sur la figure 3, la température d'évaporation $T_{evapo}$ est calculée en utilisant la valeur de la température maximale de l'air $T_{max}$ et la valeur de la température minimale de l'air $T_{min}$ mesurées dans la zone de surchauffe de l'évaporateur, selon la loi :

$$T_{evapo} = x.T_{min} + (1-x).T_{max}.$$

où x est un coefficient obtenu expérimentalement ou calculé pour estimer la température de l'air traversant l'évaporateur.

Ainsi, la valeur de la température d'évaporation obtenue conformément à la variante de la figure 3 représente la température moyenne de l'air derrière l'évaporateur.

L'unité de contrôle 40 peut alors mettre en oeuvre une régulation classique, par exemple de type PID, du compresseur de manière à minimiser l'écart entre la valeur ainsi calculée de la température d'évaporation $T_{evapo}$ et la consigne de température d'évaporation $T_{evapocons}$, fournie par le tableau de commande d'habitacle.

Il est maintenant fait référence au schéma fonctionnel de la figure 4, qui illustre le contrôle de la vanne de détente 12 et du compresseur à contrôle externe selon la variante de la figure 2. Ce schéma fonctionnel s'applique de manière analogue à la forme de réalisation de la figure 3, en remplaçant le paramètre $T_{in}$ par $T_{min}$ et le paramètre $T_{out}$ par $T_{max}$.

A l'étape 300, l'unité de contrôle 40 détermine la consigne de la grandeur relative à la surchauffe ($T_{out}$ - $T_{in}$)$_{cons}$. Cette consigne sera déterminée selon la courbe donnant la relation entre la surchauffe et le coefficient optimal de performance (COP). Cette consigne varie en fonction du fluide réfrigérant employé. Pour le fluide R134A, elle est de l'ordre de 12°C à 15°C.

A l'étape 301, l'unité de contrôle 40 détermine ensuite la grandeur relative à la surchauffe ($T_{out}$-$T_{in}$) à partir des mesures des températures $T_{out}$ et $T_{in}$.

A l'étape 302, l'unité de contrôle compare ensuite la grandeur relative à la surchauffe déterminée à l'étape 301 à sa consigne obtenue à l'étape 300. Le signal de commande de la vanne de détente 12 est ensuite ajusté tant que la grandeur relative à la surchauffe n'a pas atteint sa consigne, à l'étape 302 (régulation PID).

En parallèle, l'unité de contrôle 40 contrôle le compresseur 14 de manière à réguler la température d'évaporation $T_{evapo}$.

Ainsi, à l'étape 310, l'unité de contrôle 40 détermine la température d'évaporation à partir des mesures des températures $T_{out}$ et $T_{in}$.

A l'étape 312, l'unité de contrôle compare ensuite la valeur de la température d'évaporation $T_{evapo}$ obtenue à l'étape 310 à sa consigne $T_{evapocons}$, fournie par le tableau de commande d'habitacle. Le signal de commande du compresseur 14 est ensuite ajusté tant que la grandeur relative à la surchauffe n'a pas atteint sa consigne, à l'étape 312 (régulation PID).

Dans la première forme de réalisation, l'unité de contrôle 40 peut utiliser en complément les valeurs des paramètres de refoulement du fluide réfrigérant en sortie du compresseur 14 pour contrôler la vanne de détente 12 et, le cas échéant, le compresseur 14. L'installation prévoit pour cela un capteur 20 de température et de pression placé en sortie du compresseur 14 ou en entrée du condenseur 11 pour mesurer la pression de refoulement Pr et la température de refoulement Tr du fluide réfrigérant à l'entrée du condenseur. Les valeurs de ces paramètres Pr et Tr fournies par le capteur 20 sont ensuite comparées à des valeurs seuil, et en fonction du résultat de cette comparaison, le fonctionnement de la vanne de détente 12 et, le cas échéant, celui du compresseur 14 sont adaptés. Ainsi, par exemple, l'unité de contrôle augmente l'ouverture de la vanne de détente 12, s'il est déterminé que les valeurs mesurées par le capteur 20 sont supérieures à leurs seuils respectifs, et diminue la capacité du compresseur 14 si le degré d'ouverture de la vanne de détente 12 est supérieur à un seuil d'ouverture prédéterminé, ce qui permet de maintenir les paramètres de refoulement Pr et Tr à un niveau acceptable.

Selon une autre variante, il est possible de réduire la cylindrée du compresseur 14 dans un premier temps. Lorsque la cylindrée est réduite à un seuil déterminé, on commence à augmenter le degré d'ouverture de la vanne de détente 12.

Ainsi donc, la première forme de réalisation n'utilise que trois capteurs pour contrôler la vanne de détente 12 et, le cas échéant, le compresseur 14.

Par ailleurs, l'installation, selon cette première forme de réalisation, n'utilise pas de capteur de pression à la sortie de l'évaporateur 13 pour contrôler la vanne de détente 12 et le compresseur 14, ce qui permet de réduire les coûts de l'installation.

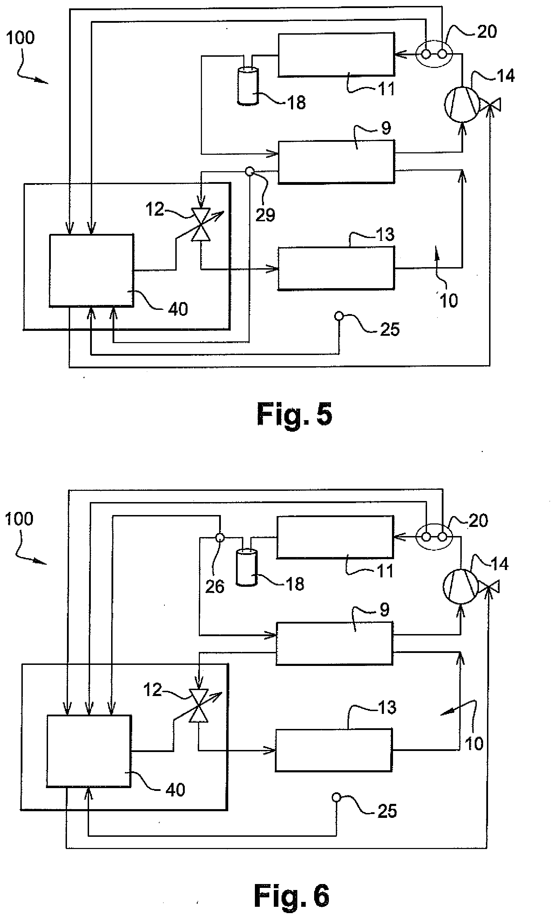

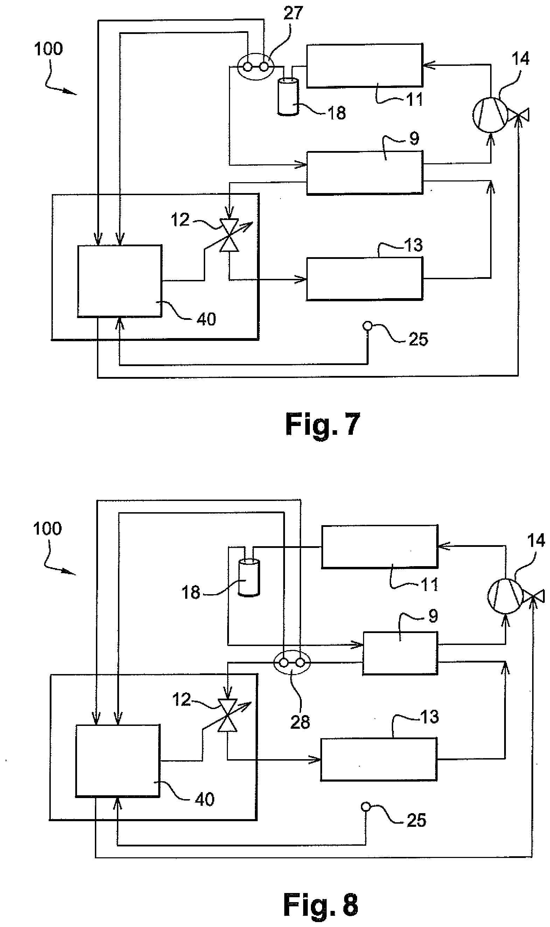

Il est maintenant fait référence aux figures 5 à 9 qui illustrent une deuxième forme de réalisation, dont les variantes des figures 7 et 8 sont conformes à l'invention.

Dans cette deuxième forme de réalisation, l'unité de contrôle 40 contrôle le signal de commande de la vanne de détente 12 de manière à réguler une grandeur de commande relative au sous refroidissement à l'entrée de la vanne de détente 12, selon une loi de régulation choisie. La régulation du sous refroidissement en entrée de la vanne de détente 12 permet d'agir indirectement sur la surchauffe à la sortie de l'évaporateur 13.

Dans les variantes représentées sur les figures 5 et 6, l'unité de contrôle régule la température Tsc du fluide réfrigérant, comme grandeur relative au sous refroidissement.

En particulier, dans la variante de la figure 5, la température Tsc de sous refroidissement du fluide réfrigérant correspond à la température du fluide réfrigérant à l'entrée de la vanne de détente 12.

Cette température peut être mesurée en utilisant une sonde de température 29 placée à l'entrée de la vanne de détente 12.

L'unité de contrôle 40 contrôle la vanne de détente 12 de manière à réguler la température Tsc selon une loi de régulation choisie, par exemple une loi de régulation en boucle fermée de type PID. Pour cela, l'unité de contrôle 40 détermine la consigne de la température du fluide à l'entrée de la vanne de détente 12, $Tsc_{cons}$, puis contrôle l'ouverture de la vanne de détente 12 de manière à réduire l'écart entre la mesure de la température Tsc fournie par les capteur 29 et la consigne de la température $Tsc_{cons}$. $Tsc_{cons}$ est déterminé selon une relation entre le sous refroidissement et le coefficient optimal de performance (COP). Le contrôle de $Tsc_{cons}$ est simple.

De plus, un capteur de température et de pression 20 peut être utilisée en complément à la sortie du compresseur 14, de manière analogue à la première forme de réalisation.

Dans la variante de la figure 6, la température Tsc de sous refroidissement du fluide réfrigérant correspond à la température du fluide réfrigérant en sortie du condenseur 11. Cette température peut être mesurée en utilisant une sonde de température 26 placée à la sortie du condenseur 11.

L'unité de contrôle 40 gère la vanne de détente 12 de manière à réguler la pression mesurée par le capteur 20 pour que la pression soit en corrélation avec la loi déterminée, par exemple une loi de régulation en boucle fermée de type PID, pour la température mesurée par le capteur 26.

Les figures 7 et 8 représentent des variantes suivant l'invention de la deuxième forme de réalisation dans lesquelles l'unité de contrôle 40 contrôle en outre la performance de l'échangeur interne de manière limiter la température d'aspiration et de refoulement du compresseur 14, ou dans lesquelles l'unité de contrôle 40 contrôle la performance de l'échangeur interne à partir le débit massique Mc du fluide réfrigérant, en plus de la régulation de la grandeur de commande relative au sous refroidissement.

Plus précisément, dans la forme de réalisation de la figure 7, l'unité de contrôle 40 contrôle la vanne de détente 12 de manière à réguler la haute pression du fluide réfrigérant HP, selon une loi de régulation choisie. En complément, l'unité de contrôle 40 contrôle l'efficacité $E_{IHX}$ de l'échangeur interne 9 pour ajuster encore le fonctionnement de la vanne de détente 12.

L'unité de contrôle 40 effectue la régulation de la haute pression HP en comparant une mesure de la haute pression HP à sa valeur de consigne $HP_{cons}$, selon la loi de régulation choisie, par exemple une loi de régulation en boucle fermée, de type PID, et agit sur la vanne de détente 12 en fonction du résultat de cette comparaison.

Dans ce mode de réalisation, la mesure de la haute pression HP est obtenue grâce à un capteur 27 placé en sortie du condenseur 11 qui fournit la pression du fluide réfrigérant à la sortie du condenseur 11. Par ailleurs, l'unité de contrôle 40 calcule la consigne de la haute pression $HP_{cons}$ à partir de la mesure de la température Tsc du fluide réfrigérant à la sortie du condenseur. Dans cette variante, il est avantageux de mesurer également la température Tsc en sortie du condenseur 11 car cela permet d'utiliser un capteur de température et de pression unique 27, placé en sortie du condenseur 11, qui fournit à la fois la température Tsc et la pression HP du fluide réfrigérant.

Le sous refroidissement SC correspond à la différence entre la température de saturation Tsat du fluide réfrigérant et la température en entrée du détendeur Tsc, conformément à l'équation ci-après :

$$SC = Tsat(HP) - Tsc,$$

où la température de saturation Tsat du fluide réfrigérant est fonction de la pression HP du fluide réfrigérant en entrée de la vanne de détente 12.

L'unité de contrôle 40 effectue la régulation du sous refroidissement SC en comparant une valeur calculée du sous refroidissement SC à sa valeur de consigne $SC_{cons}$, selon la loi de régulation choisie, par exemple une loi de régulation en boucle fermée, de type PID. Elle agit ensuite sur la vanne de détente 12 en fonction du résultat de cette comparaison.

La valeur du sous refroidissement SC est obtenue grâce à un capteur 27 placé en sortie du condenseur 11 qui fournit une mesure de la température Tsc de sous refroidissement du fluide réfrigérant et une mesure de la haute pression HP du fluide réfrigérant en entrée de la vanne de détente 12. La mesure de la haute pression permet de déterminer la température de saturation Tsat du fluide réfrigérant.

Dans les deux formes de réalisation des figures 7 et 8, l'unité de contrôle 40 régule en complément l'efficacité $E_{IHX}$ de l'échangeur interne 9 en la comparant à une limite d'efficacité $L_{IHX}$. Le fonctionnement de la vanne de commande est ajusté lorsque le résultat de la comparaison indique que l'efficacité $E_{IHX}$ dépasse la limite d'efficacité $L_{IHX}$.

La prise en compte de l'efficacité $E_{IHX}$ de l'échangeur interne 9 pour contrôler la vanne de détente 12 permet de garantir une protection contre une température de refoulement du compresseur trop élevée et de limiter la pression d'aspiration du compresseur. Pour cela, l'efficacité de l'échangeur interne 9 est estimée à partir du débit du fluide réfrigérant.

Selon l'installation de la figure 7, le débit massique Mc peut être calculé à partir du modèle condenseur, donc à partir de la température de sous refroidissement Tsc, de la température ambiante et de la haute pression HP dont une mesure est fournie par le capteur 27.

Selon la forme de réalisation de la figure 8, l'unité de contrôle 40 gère la vanne de détente 12 de manière à réguler le sous refroidissement du fluide réfrigérant et l'efficacité de l'échangeur interne 9 afin de limiter la température d'aspiration et de refoulement du compresseur 14.

Dans l'installation de la figure 8, l'unité de contrôle 40 peut estimer l'efficacité $E_{IHX}$ de l'échangeur interne 9 en calculant le débit massique de fluide réfrigérant Mc. Le débit Mc peut par exemple être calculé selon la relation suivante :

$$Mc = Kv.[2\rho.(HP-LP)]^{1/2}$$

où p est la masse volumique du fluide, et LP représente la basse pression qui peut être estimée selon la loi de contrôle du compresseur.

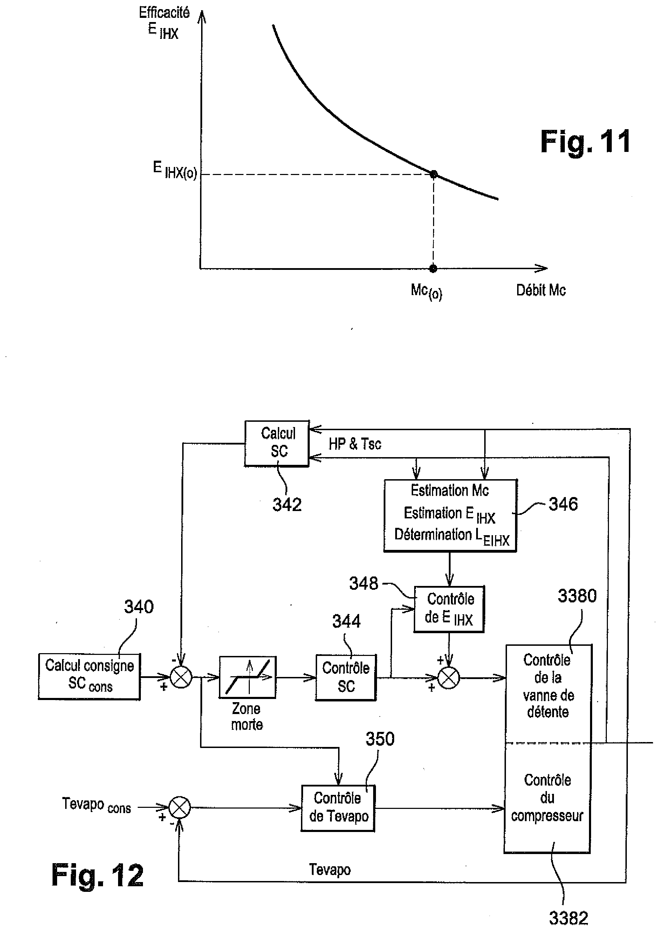

La valeur de l'efficacité $E_{IHX}$ de l'échangeur interne 9 peut ensuite être estimée de manière expérimentale ou par des simulations, à partir de la valeur calculée du débit massique de fluide réfrigérant Mc. Par exemple, elle peut être déterminée en utilisant un diagramme analogue à celui de la figure 11.

La figure 11 donne en effet un exemple de loi d'évolution liant l'efficacité $E_{IHX}$ de l'échangeur interne au débit de fluide Mc. Elle montre notamment que l'efficacité $E_{IHX}$ diminue en fonction du débit de fluide Mc et qu'à une valeur $Mc_{(0)}$ donnée correspond une valeur unique $E_{IHX(0)}$ sur la courbe.

L'unité de contrôle 40 peut donc tirer une estimation de l'efficacité de l'échangeur interne $E_{IHX}$ d'un tel diagramme, à partir de la valeur calculée du débit de fluide réfrigérant $M_C$.

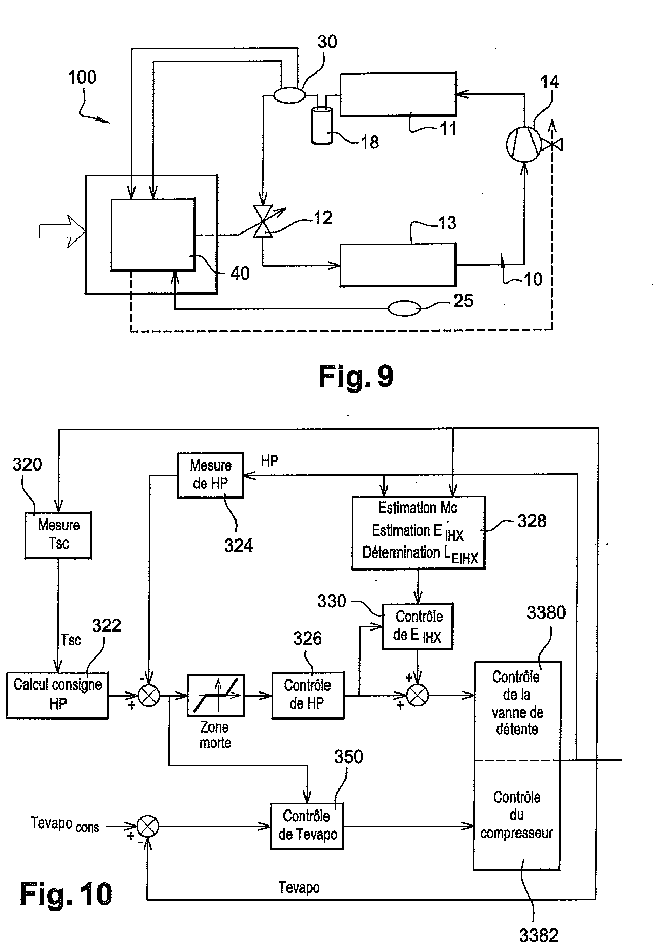

La figure 9 représente une variante simplifiée de la figure 8, dans laquelle le circuit de climatisation n'est pas muni d'échangeur interne. Cette variante n'est donc pas conforme à l'invention.

Dans cette variante, un réservoir déshydrateur 16 peut être prévu à la sortie du condenseur 11 pour assurer une réserve de fluide réfrigérant, alimenter le détendeur en liquide, et/ou éliminer les acides nuisibles et les particules étrangères.

Est prévu dans cette variante un capteur 30 de température et de pression en sortie du condenseur 11 pour effectuer une régulation du sous refroidissement SC ou une régulation de la pression HP comme décrit en référence aux figures 7 ou 8. En l'absence de l'échangeur interne, il n'y a pas lieu de prévoir une régulation complémentaire de l'efficacité de l'échangeur interne ou une régulation de la pression et de la température de refoulement en sortie du compresseur 14. Ainsi, cette variante ne fait intervenir que deux capteurs: un capteur de température et de pression 30 utilisé pour contrôler la vanne de détente 12, et une sonde de température 25 utilisée pour contrôler le compresseur 14.

Il est maintenant fait référence au schéma fonctionnel de la figure 10, qui illustre le contrôle de la vanne de détente 12 et du compresseur à contrôle externe selon la variante de la figure 7.

A l'étape 322, l'unité de contrôle 40 détermine la consigne de la grandeur HP relative au sous refroidissement $HP_{cons}$, à partir de la mesure de la température Tsc fournie par le capteur 27 à l'étape 320.

A l'étape 324, l'unité de contrôle 40 reçoit la mesure de la grandeur HP du capteur 27.

A l'étape 326, l'unité de contrôle compare ensuite cette mesure HP à sa consigne $HP_{cons}$ obtenue à l'étape 322. A l'étape 326 (régulation PID), le signal de commande de la vanne de détente 12 est ensuite ajusté tant que la grandeur HP n'a pas atteint sa consigne.

En complément, l'unité de contrôle 40 contrôle l'efficacité $E_{IHX}$ de l'échangeur interne 9 , à l'étape 330, en la comparant à une limite d'efficacité $L_{IHX}$. A l'étape 328, l'unité de contrôle 40 estime au préalable le débit de fluide Mc par le modèle condenseur, l'efficacité $E_{IHX}$ à partir du débit de fluide Mc estimé, et détermine la limite d'efficacité $L_{IHX}$. Le fonctionnement de la vanne de commande est ajusté lorsque le résultat de la comparaison indique que l'efficacité $E_{IHX}$ dépasse la limite d'efficacité $L_{IHX}$.

En parallèle, l'unité de contrôle 40 contrôle le compresseur 14 de manière à réguler la température d'évaporation $T_{evapo}$: l'unité de contrôle 40 compare, à l'étape 350, la valeur de la température d'évaporation $T_{evapo}$ à sa consigne $T_{evapocons}$, fournie par le tableau de commande d'habitacle. Le signal de commande du compresseur 14 est ensuite ajusté tant que la grandeur relative à la surchauffe n'a pas atteint sa consigne.

Le schéma fonctionnel de la figure 12 illustre le contrôle de la vanne de détente 12 et du compresseur à contrôle externe selon la variante de la figure 8.

Dans cette variante, à l'étape 340, l'unité de contrôle 40 détermine la consigne du sous refroidissement SC$_{cons}$ selon une table établie par des résultats d'essais ou de simulation. SC$_{cons}$ correspond au maximum du coefficient optimal de performance (COP).

A l'étape 342, l'unité de contrôle 40 calcule ensuite la valeur du sous refroidissement SC à partir de la mesure de la haute pression HP et de la mesure de la température Tsc, en entrée de la vanne de détente 12, fournies par le capteur 28.

A l'étape 344, l'unité de contrôle compare ensuite cette valeur SC à sa consigne SC$_{cons}$. Le signal de commande de la vanne de détente 12 est ensuite ajusté tant que la grandeur relative à la surchauffe n'a pas atteint sa consigne. L'unité de contrôle 40 peut en complément contrôler l'efficacité E$_{IHX}$ de l'échangeur interne 9 et le compresseur 14, comme décrit en référence à la figure 7.

L'invention permet donc de contrôler la vanne de détente électrique 12 et le cas échéant le compresseur à contrôle externe 14 en optimisant le coefficient de performance (COP) et en utilisant un nombre minimal de capteurs dans le circuit de climatisation. En particulier, l'invention permet d'éviter l'utilisation d'un capteur de pression à la sortie de l'évaporateur et ainsi de diminuer les coûts de l'installation.

Selon l'invention, les installations décrites comprennent des échangeurs internes. De plus, les exemples décrits ont été faits en prenant des circuits incorporant un condenseur.

## Revendications

1. Installation de climatisation, notamment pour véhicule à moteur, équipée d'un circuit climatisation comprenant un compresseur (14), un condenseur (11), une vanne de détente électrique (12) dont le degré d'ouverture varie en fonction d'un signal de commande, un évaporateur (13), parcourus dans cet ordre par un fluide réfrigérant, et un échangeur interne (9) permettant au fluide circulant du condenseur (11) vers le dispositif de détente (12) de céder de la chaleur au fluide circulant de l'évaporateur (13) vers le compresseur (14),
l'installation de climatisation comportant en outre une unité de contrôle (40) apte à contrôler le signal de commande de la vanne de détente (12) à partir de mesures de température et de pression effectuées par un capteur de pression et de température du fluide réfrigérant(27, 28) disposé à la sortie du condenseur (11) et/ou à l'entrée de la vanne de détente (12), de manière à réguler une grandeur de commande relative au sous refroidissement du condenseur (11) selon une loi de régulation choisie, l'installation étant **caractérisée en ce que** l'unité de contrôle (40) régule l'efficacité de l'échangeur interne (9) de façon à garantir une protection contre une température de refoulement du compresseur trop élevée et de limiter la pression d'aspiration du compresseur, l'unité de contrôle (40) étant apte à comparer l'efficacité de l'échangeur interne à un seuil prédéfini pour réguler l'efficacité de l'échangeur interne (9), l'unité de contrôle (40) étant apte à déterminer la valeur de l'efficacité de l'échangeur interne (9) à partir du débit massique du fluide réfrigérant estimé en fonction de mesures de la haute pression et de la température de sous refroidissement du fluide réfrigérant.

2. Installation selon la revendication 1, **caractérisée en ce que** l'unité de contrôle (40) est apte à effectuer ladite régulation de la grandeur de commande en comparant la grandeur de commande à une valeur de consigne de ladite grandeur de commande.

3. Installation selon la revendication 2, **caractérisée en ce que** la grandeur relative à la surchauffe correspond à la différence entre deux mesures de températures correspondant respectivement à la température du fluide prise au niveau de l'entrée et de la sortie de l'évaporateur (13).

4. Installation selon la revendication 3, **caractérisée en ce qu'**elle comporte deux sondes de température (22, 24) placées au contact du fluide en entrée et en sortie de l'évaporateur propres à fournir les deux mesures de température.

5. Installation selon la revendication 2, **caractérisée en ce que** la grandeur relative à la surchauffe correspond à la différence entre deux mesures de température correspondant respectivement à la température maximale et à la température minimale du flux d'air qui balaie l'évaporateur (13).

6. Installation selon la revendication 5, **caractérisée en ce qu'**elle comporte deux sondes de température (21, 23), placées dans les ailettes de l'évaporateur (13) et/ou derrière l'évaporateur (13), propres à fournir respectivement une mesure de la température maximale et de la température minimale.

7. Installation selon l'une des revendications 2 à 6, **caractérisée en ce que** le compresseur (14) est un compresseur à contrôle externe muni d'une vanne de contrôle dont la section de passage varie en fonction d'un signal de commande, et **en ce que** l'unité de contrôle (40) est apte à contrôler le signal de commande du compresseur (14) de manière à réguler la température d'évaporation de l'évaporateur (13) et/ou à limiter la température de refoulement ou d'aspiration du compresseur (14), la température d'évaporation étant calculée en fonction desdites mesures de température.

8. Installation selon la revendication 2, **caractérisée en ce que** la grandeur relative au sous refroidissement correspond à la température de sous refroidissement du fluide réfrigérant.

9. Installation selon la revendication 8, **caractérisée en ce qu'**elle comporte une sonde de température (26) placée au contact du fluide en sortie du condenseur (11).

10. Installation selon la revendication 8, **caractérisée en ce qu'**elle comporte une sonde de température (29) placée au contact du fluide en entrée de la vanne de détente (12) propre à fournir une mesure de la température de sous refroidissement.

11. Installation selon l'une des revendications 8 à 10, **caractérisée en ce que** le compresseur (14) est à contrôle externe muni d'une vanne de contrôle dont la section de passage varie en fonction d'un signal de commande, et **en ce que** l'unité de contrôle (40) est en outre apte à contrôler la vanne de détente et le compresseur de manière à maintenir la température et la pression de refoulement en sortie du compresseur (14) en dessous de seuils respectifs prédéterminés.

12. Installation selon la revendication 2, **caractérisée en ce que** la grandeur relative au sous refroidissement correspond à la différence entre la température de saturation du fluide réfrigérant et la température de sous refroidissement du fluide réfrigérant.

13. Installation selon la revendication 12, **caractérisée en ce qu'**elle comporte un capteur (28) de température placé au contact du fluide en entrée de la vanne de détente (12) propre à fournir une mesure de la température de sous refroidissement.

14. Installation selon l'une des revendications 12 et 13, **caractérisée en ce qu'**elle comporte un capteur (28) de pression placé au contact du fluide en entrée de la vanne de détente (12) propre à fournir une mesure de la pression en entrée de la vanne de détente (12) et **en ce que** l'unité de contrôle (40) est apte à estimer la température de saturation du fluide à partir de ladite mesure de pression.

15. Installation selon la revendication 2, **caractérisée en ce que** la grandeur relative au sous refroidissement correspond à la pression et de température en sortie du condenseur (11).

16. Installation selon la revendication 15, **caractérisée en ce qu'**elle comporte un capteur (27) de pression en sortie du condenseur pour mesurer la pression du fluide en sortie du condenseur (11).

17. Installation selon l'une des revendications 15 et 16, **caractérisée en ce qu'**elle comporte un capteur de température (27) apte à fournir une mesure de la température du fluide en sortie du condenseur (11), et **en ce que** l'unité de contrôle est apte à estimer la consigne de la pression en sortie du condenseur à partir de la mesure de température fournie par le capteur.

18. Installation selon la revendication 17, **caractérisée en ce que** le capteur de température (27) est placé au contact du fluide en sortie du condenseur (11).

19. Installation selon l'une des revendications précédentes, **caractérisée en ce qu'**elle comprend un capteur (27) de température et de pression placé en sortie du condenseur pour mesurer la haute pression et la température de sous refroidissement du fluide réfrigérant.

20. Installation selon l'une des revendications précédentes, **caractérisée en ce que** la régulation de la grandeur de commande est une régulation en boucle fermée.

21. Installation selon l'une des revendications précédentes, **caractérisée en ce que** l'unité de contrôle (40) gère le signal de commande de la vanne de détente et/ou du compresseur pour limiter la température de décharge et/ou d'aspiration du compresseur.

22. Procédé de régulation d'un circuit de climatisation, comprenant un compresseur (14), un condenseur (11), une vanne de détente électrique (12) dont le degré d'ouverture varie en fonction d'un signal de commande, et un évaporateur (13), parcourus dans cet ordre par un fluide réfrigérant, et un échangeur interne (9) permettant au fluide circulant du condenseur (11) vers le dispositif de détente (12) et de céder de la chaleur au fluide circulant de l'évaporateur (13) vers le compresseur (14),
procédé dans lequel on contrôle le signal de commande de la vanne du détente (12) à partir de mesures de température et de pression effectuées par un capteur de pression et de température (27, 28) disposé à la sortie du condenseur (11) et/ou en entrée de la vanne de détente (12) de manière à réguler une grandeur de commande relative au sous refroidissement du condenseur (11) selon une loi de régulation choisie,
le procédé étant **caractérisé en ce que** l'unité de contrôle (40) régule l'efficacité de l'échangeur interne (9) de façon à garantir une protection contre une température de refoulement du compresseur trop élevée et de limiter la pression d'aspiration du compresseur, le contrôle comparant l'efficacité de l'échangeur interne (9) à un seuil prédéfini pour réguler l'efficacité de l'échangeur interne (9), et déterminant la valeur de l'efficacité de l'échangeur interne (9) à partir du débit massique du fluide réfrigérant estimé en fonction de mesures de la haute pression et de la température de sous refroidissement du fluide réfrigérant.

**Patentansprüche**

1. Klimaanlage, insbesondere für ein Kraftfahrzeug, mit einem Klimatisierungskreislauf, umfassend einen Kompressor (14), einen Kondensator (11), ein elektrisches Entspannungsventil (12), dessen Öffnungsgrad in Abhängigkeit von einem Stellsignal variiert, einen Verdampfer (13), die in dieser Reihenfolge von einem Kältemittel durchflossen werden, und einen internen Tauscher (9), der es dem vom Kondensator (11) zur Entspannungsvorrichtung (12) zirkulierenden Mittel ermöglicht, Wärme an das vom Verdampfer (13) zum Kompressor (14) zirkulierende Mittel abzugeben, wobei die Klimaanlage ferner eine Steuerungseinheit (40) umfasst, die geeignet ist, das Stellsignal des Entspannungsventils (12) ausgehend von Temperatur- und Druckmessungen, die von einem Sensor für Druck und Temperatur des Kältemittels (27, 28) durchgeführt werden, der am Auslass des Kondensators und/oder am Einlass des Entspannungsventils (12) angeordnet ist, zu steuern, so dass eine Stellgröße bezüglich der Unterkühlung des Kondensators (11) nach einem ausgewählten Regelungsgesetz geregelt wird, wobei die Anlage **dadurch gekennzeichnet ist, dass** sie über das Stellsignal des Entspannungsventils (12) den Wirkungsgrad des internen Tauschers (9) regelt, so dass ein Schutz vor einer zu hohen Austrittstemperatur garantiert wird und der Ansaugdruck des Kompressors begrenzt wird, wobei die Steuerungseinheit (40) geeignet ist, den Wirkungsgrad des internen Tauschers mit einem vorgegebenen Schwellenwert zu vergleichen, um den Wirkungsgrad des internen Tauschers (9) zu regeln, wobei die Steuerungseinheit (40) auch geeignet ist, den Wert des Wirkungsgrads des internen Tauschers (9) ausgehend vom Massenstrom des Kältemittels zu bestimmen, der in Abhängigkeit von Messungen des hohen Drucks und der Unterkühlungstemperatur des Kältemittels geschätzt wird.

2. Anlage nach Anspruch 1, **dadurch gekennzeichnet, dass** die Steuerungseinheit (40) geeignet ist, die Regelung der Stellgröße durchzuführen, indem sie die Stellgröße mit einem Sollwert der Stellgröße vergleicht.

3. Anlage nach Anspruch 2, **dadurch gekennzeichnet, dass** die auf die Überhitzung bezogene Größe der Differenz zwischen zwei Temperaturmessungen entspricht, die jeweils der am Einlass und am Auslass des Verdampfers (13) abgegriffenen Temperatur des Mittels entsprechen.

4. Anlage nach Anspruch 3, **dadurch gekennzeichnet, dass** sie zwei Temperaturfühler (22, 24) umfasst, die in Kontakt mit dem Mittel im Einlass und im Auslass des Verdampfers angeordnet sind und geeignet sind, die beiden Temperaturmessungen abzugeben.

5. Anlage nach Anspruch 2, **dadurch gekennzeichnet, dass** die auf die Überhitzung bezogene Größe der Differenz zwischen zwei Temperaturmessungen entspricht, die jeweils der höchsten Temperatur und der niedrigsten Temperatur des den Verdampfer (13) überstreichenden Luftstroms entsprechen.

6. Anlage nach Anspruch 5, **dadurch gekennzeichnet, dass** sie zwei Temperaturfühler (21, 23) umfasst, die in den Rippen des Verdampfers (13) und/oder hinter dem Verdampfer (13) angeordnet sind und geeignet sind, jeweils eine Messung der höchsten Temperatur und der niedrigsten Temperatur abzugeben.

7. Anlage nach einem der Ansprüche 2 bis 6, **dadurch gekennzeichnet, dass** der Kompressor (14) ein Kompressor mit externer Steuerung ist, der mit einem Steuerventil versehen ist, dessen Durchlassquerschnitt in Abhängigkeit von einem Stellsignal variiert, und dass die Steuerungseinheit (40) geeignet ist, das Stellsignal des Kompressors (14) so zu steuern, dass die Verdampfungstemperatur des Verdampfers (13) geregelt wird und/oder die Austritts- oder Ansaugtemperatur des Kompressors (14) begrenzt wird, wobei die Verdampfungstemperatur in Abhängigkeit von den Temperaturmessungen berechnet wird.

8. Anlage nach Anspruch 2, **dadurch gekennzeichnet, dass** die auf die Unterkühlung bezogene Größe der Unterkühlungstemperatur des Kältemittels entspricht.

9. Anlage nach Anspruch 8, **dadurch gekennzeichnet, dass** sie einen Temperaturfühler (26) umfasst, der in Kontakt mit dem Mittel im Auslass des Kondensators (11) angeordnet ist.

10. Anlage nach Anspruch 8, **dadurch gekennzeichnet, dass** sie einen Temperaturfühler (29) umfasst, der in Kontakt mit dem Mittel im Einlass des Entspannungsventils (12) angeordnet ist und geeignet ist, eine Messung der Unterkühlungstemperatur abzugeben.

11. Anlage nach einem der Ansprüche 8 bis 10, **dadurch gekennzeichnet, dass** der Kompressor (14) ein Kompressor mit externer Steuerung ist, der mit einem Steuerventil versehen ist, dessen Durchlassquerschnitt in Abhängigkeit von einem Stellsignal variiert, und dass die Steuerungseinheit (40) ferner geeignet ist, das Entspannungsventil und den Kompressor so zu steuern, dass die Austrittstemperatur und der Austrittsdruck im Auslass des Kompressors (14) unter jeweiligen vorbestimmten Schwellenwerten gehalten werden.

12. Anlage nach Anspruch 2, **dadurch gekennzeichnet, dass** die auf die Unterkühlung bezogene Größe der Differenz zwischen der Sättigungstemperatur des Kältemittels und der Unterkühlungstemperatur des Kältemittels entspricht.

13. Anlage nach Anspruch 12, **dadurch gekennzeichnet, dass** sie einen Temperatursensor (28) umfasst, der in Kontakt mit dem Mittel im Einlass des Entspannungsventils (12) angeordnet ist und geeignet ist, eine Messung der Unterkühlungstemperatur abzugeben.

14. Anlage nach einem der Ansprüche 12 und 13, **dadurch gekennzeichnet, dass** sie einen Drucksensor (28) umfasst, der in Kontakt mit dem Mittel im Einlass des Entspannungsventils (12) angeordnet ist und geeignet ist, eine Messung des Drucks im Einlass des Entspannungsventils (12) abzugeben, und dass die Steuerungseinheit (40) geeignet ist, die Sättigungstemperatur des Mittels ausgehend von der Druckmessung zu schätzen.

15. Anlage nach Anspruch 2, **dadurch gekennzeichnet, dass** die auf die Unterkühlung bezogene Größe dem Druck und der Temperatur im Auslass des Kondensators (11) entspricht.

16. Anlage nach Anspruch 15, **dadurch gekennzeichnet, dass** sie einen Drucksensor (27) im Auslass des Kondensators umfasst, um den Druck des Mittels im Auslass des Kondensators (11) zu messen.

17. Anlage nach einem der Ansprüche 15 und 16, **dadurch gekennzeichnet, dass** sie einen Temperatursensor (27) umfasst, der geeignet ist, eine Messung der Temperatur des Mittels im Auslass des Kondensators (11) abzugeben, und dass die Steuerungseinheit geeignet ist, den Sollwert des Drucks im Auslass des Kondensators ausgehend von der vom Sensor abgegebenen Temperaturmessung zu schätzen.

18. Anlage nach Anspruch 17, **dadurch gekennzeichnet, dass** der Temperatursensor (27) in Kontakt mit dem Mittel im Auslass des Kondensators (11) angeordnet ist.

19. Anlage nach einem der vorhergehenden Ansprüche, **dadurch gekennzeichnet, dass** sie einen Temperatur- und Drucksensor (27) umfasst, der im Auslass des Kondensators angeordnet ist, um den hohen Druck und die Unterkühlungstemperatur des Kältemittels zu messen.

20. Anlage nach einem der vorhergehenden Ansprüche, **dadurch gekennzeichnet, dass** die Regelung der Stellgröße eine Regelung im geschlossenen Regelkreis ist.

21. Anlage nach einem der vorhergehenden Ansprüche, **dadurch gekennzeichnet, dass** die Steuerungseinheit (40) das Stellsignal des Entspannungsventils und/oder des Kompressors verwaltet, um die Auslass- und/oder Ansaugtemperatur des Kompressors zu begrenzen.

22. Verfahren zur Regelung eines Klimatisierungskreislaufs, umfassend einen Kompressor (14), einen Kondensator (11), ein elektrisches Entspannungsventil (12), dessen Öffnungsgrad in Abhängigkeit von einem Stellsignal variiert, und einen Verdampfer (13), die in dieser Reihenfolge von einem Kältemittel durchflossen werden, und einen internen Tauscher (9), der es dem vom Kondensator (11) zur Entspannungsvorrichtung (12) zirkulierenden Mittel ermöglicht, Wärme an das vom Verdampfer (13) zum Kompressor (14) zirkulierende Mittel abzugeben,
wobei bei dem Verfahren das Stellsignal des Entspannungsventils (12) ausgehend von Temperatur- und Druckmessungen gesteuert wird, die von einem Sensor für Druck und Temperatur des Kältemittels (27, 28) durchgeführt werden, der im Auslass des Kondensators (11) und/oder im Einlass des Entspannungsventils (12) angeordnet ist, so dass eine Stellgröße bezüglich der Unterkühlung des Kondensators (11) nach einem ausgewählten Regelungsgesetz geregelt wird,
wobei das Verfahren **gekennzeichnet ist durch** die Regelung des Wirkungsgrades des internen Tauschers (9) über das Stellsignal des Entspannungsventils (12), so dass ein Schutz vor einer zu hohen Austrittstemperatur des Kompressors garantiert wird und der Ansaugdruck des Kompressors begrenzt wird, wobei die Steuerung den Wirkungsgrad des internen Tauschers (9) mit einem vorgegebenen Schwellenwert vergleicht, um den Wirkungsgrad des internen Tauschers (9) zu regeln, und den Wert des Wirkungsgrades des internen Tauschers (9) ausgehend vom Massenstrom des Kältemittels bestimmt, der in Abhängigkeit von Messungen des hohen Drucks und der Unterkühlungstemperatur des Kältemittels geschätzt wird.

**Claims**

1. Air conditioning installation, notably for a motor vehicle, equipped with an air conditioning circuit comprising a compressor (14), a condenser (11), an electric expansion valve (12) the degree of opening of which varies according to a control signal, an evaporator (13), through which there passes, in that order, a refrigerant fluid, and an internal exchanger (9) allowing the fluid circulating from the condenser (11) towards the expansion device (12) to release heat to the fluid circulating from the evaporator (13) towards the compressor (14), the air conditioning installation further comprising a control unit (40) able to control the control signal that operates the expansion valve (12) on the basis of temperature and pressure measurements taken by a refrigerant fluid temperature and pressure sensor (27, 28) positioned at the outlet of the condenser and/or at the inlet of the expansion valve (12) so as to regulate a control parameter relating to the subcooling of the condenser (11) according to a chosen control law, the installation being **characterized in that** it uses the control signal that operates the expansion valve (12) to regulate the efficiency of the internal exchanger (9) so as to ensure protection against too high a compressor delivery temperature and limit the compressor intake pressure, the control unit (40) being able to compare the efficiency of the internal exchanger against a predefined threshold in order to regulate the efficiency of the internal exchanger (9), the control unit (40) also being able to determine the value of the efficiency of the internal exchanger (9) from the mass flow rate of the refrigerant fluid estimated from measurements of the high pressure and of the subcooled temperature of the refrigerant fluid.

2. Installation according to Claim 1, **characterized in that** the control unit (40) is able to perform the said regulation of the control parameter by comparing the control parameter against a setpoint value of the said control parameter.

3. Installation according to Claim 2, **characterized in that** the parameter relating to superheating corresponds to the difference between two temperature measurements respectively corresponding to the temperature of the fluid measured at the inlet and at the outlet of the evaporator (13).

4. Installation according to Claim 3, **characterized in that** it comprises two temperature probes (22, 24) placed in contact with the fluid at the inlet and at the outlet of the evaporator and capable of supplying the two temperature measurements.

5. Installation according to Claim 2, **characterized in that** the parameter relating to the superheating corresponds to the difference between two temperature measurements respectively corresponding to the maximum temperature and to the minimum temperature of the stream of air that sweeps over the evaporator (13).

6. Installation according to Claim 5, **characterized in that** it comprises two temperature probes (21, 23) positioned in the fins of the evaporator (13) and/or behind the evaporator (13) and capable respectively of supplying a measurement of the maximum temperature and of the minimum temperature.

7. Installation according to one of Claims 2 to 6, **characterized in that** the compressor (14) is an externally controlled compressor equipped with a control valve the bore section of which varies according to a control signal, and **in that** the control unit (40) is able to control the control signal that operates the compressor (14) in such a way as to regulate the evaporation temperature of the evaporator (13) and/or as to limit the delivery or intake temperature of the compressor (14), the evaporation temperature being calculated according to the said temperature measurements.

8. Installation according to Claim 2, **characterized in that** the parameter relating to the subcooling corresponds to the subcooled temperature of the refrigerant fluid.

9. Installation according to Claim 8, **characterized in that** it comprises a temperature probe (26) placed in contact with the fluid at the outlet of the condenser (11).

10. Installation according to Claim 8, **characterized in that** it comprises a temperature probe (29) positioned in contact with the fluid at the inlet of the expansion valve (12) and capable of providing a measurement of the subcooled temperature.

11. Installation according to one of Claims 8 to 10, **characterized in that** the compressor (14) is externally controlled and equipped with a control valve the bore section of which varies according to a control signal, and **in that** the control unit (40) is also able to control the expansion valve and the compressor in such a way as to keep the delivery temperature and pressure at the outlet of the compressor (14) below predetermined respective thresholds.

12. Installation according to Claim 2, **characterized in that** the parameter relating to the subcooling corresponds to the difference between the saturation temperature of the refrigerant fluid and the subcooled temperature of the refrigerant fluid.

13. Installation according to Claim 12, **characterized in that** it comprises a temperature sensor (28) placed in contact with the fluid at the inlet to the expansion valve (12) and able to supply a measurement of the subcooled temperature.

14. Installation according to one of Claims 12 and 13, **characterized in that** it comprises a pressure sensor (28) placed in contact with the fluid at the inlet of the expansion valve (12) and capable of supplying a measurement of the pressure at the inlet of the expansion valve (12) and **in that** the control unit (40) is able to estimate the saturation temperature of the fluid from the said pressure measurement.

15. Installation according to Claim 2, **characterized in that** the parameter relating to the subcooling corresponds to the pressure and temperature at the outlet of the condenser (11).

16. Installation according to Claim 15, **characterized in that** it comprises a pressure sensor (27) at the outlet of the condenser to measure the pressure of the fluid at the outlet of the condenser (11).

17. Installation according to one of Claims 15 and 16, **characterized in that** it comprises a temperature sensor (27) able to provide a measurement of the temperature of the fluid at the outlet of the condenser (11), and **in that** the control unit is able to estimate the condenser outlet pressure setpoint from the temperature measurement supplied by the sensor.

18. Installation according to Claim 17, **characterized in that** the temperature sensor (27) is placed in contact with the fluid at the outlet of the condenser (11).

19. Installation according to one of the preceding claims, **characterized in that** it comprises a temperature and pressure sensor (27) placed at the outlet of the condenser to measure the high pressure and the subcooled temperature of the refrigerant fluid.

20. Installation according to one of the preceding claims, **characterized in that** the regulation of the control parameter is closed-loop regulation.

21. Installation according to one of the preceding claims, **characterized in that** the control unit (40) manages the control signal operating the expansion valve and/or operating the compressor in such a way as to limit the compressor discharge and/or intake temperature.

22. Method for regulating an air conditioning circuit comprising a compressor (14), a condenser (11), an electric expansion valve (12) the degree of opening of which varies according to a control signal, and an evaporator (13) through which, in that order, a refrigerant fluid passes, and an internal exchanger (9) allowing the fluid circulating from the condenser (11) towards the expansion device (12) to release heat to the fluid circulating from the evaporator (13) towards the compressor (14),
in which method the control signal operating the expansion valve (12) is controlled on the basis of pressure and temperature measurements taken by a refrigerant fluid pressure and temperature sensor (27, 28) positioned at the outlet of the condenser (11) and/or at the inlet of the expansion valve (12) so as to regulate a control parameter relating to the subcooling of the condenser (11) according to a chosen control law,
the method being **characterized by** the regulating of the efficiency of the internal exchanger (9) using the control signal that operates the expansion valve (12) so as to ensure protection against too high a compressor delivery temperature and limit the intake pressure of the compressor, the control comparing the efficiency of the internal exchanger (9) against a predefined threshold in order to regulate the efficiency of the internal exchanger (9) and determining the value of the efficiency of the internal exchanger (9) from the mass flow rate of the refrigerant fluid estimated from measurements of the high pressure and of the subcooled temperature of the refrigerant fluid.

Fig. 1

Fig. 2

**Fig. 3**

**Fig. 4**

**Fig. 5**

**Fig. 6**

**Fig. 7**

**Fig. 8**

**Fig. 9**

**Fig. 10**

Efficacité
$E_{IHX}$

$E_{IHX(o)}$

$Mc_{(o)}$     Débit Mc

**Fig. 11**

Calcul
SC

HP & Tsc

342

Estimation Mc
Estimation $E_{IHX}$
Détermination $L_{EIHX}$

346

348

Contrôle
de $E_{IHX}$

3380

340

344

Contrôle
SC

Contrôle
de la
vanne de
détente

Calcul consigne
$SC_{cons}$

Zone
morte

350

Contrôle
du
compresseur

$Tevapo_{cons}$

Contrôle
de Tevapo

**Fig. 12**

Tevapo

3382

**EP 1 965 156 B1**

## RÉFÉRENCES CITÉES DANS LA DESCRIPTION

**Documents brevets cités dans la description**

- EP 0837291 A
- EP 1703229 A
- JP 2002081766 A
- US 2007000262 A
- FR 2815397